# EUROPÄISCHE PATENTSCHRIFT

(11) **EP 1 198 993 B1**
(45) Veröffentlichungstag und Bekanntmachung des Hinweises auf die Patenterteilung: **18.01.2006**
(21) Anmeldenummer: 01250370.2
(22) Anmeldetag: 19.10.2001
(51) Int. Cl.: A23K 1/00

(54) **Verfahren zum Schutz von Eiweissfutter mit Polyacrylamid**
Method for protecting protein fodder with polyacrylamide
Procédé de protection de fourrage protéique à l'aide de polyacrylamides

(30) Priorität: 20.10.2000 RU 2000126336
(43) Veröffentlichungstag der Anmeldung: 24.04.2002
(73) Patentinhaber: Akrus Software GmbH, 10179 Berlin (DE)
(72) Erfinder: Luchowitzkij, Vladimir, ul.Gagarina, 43-63 (RU); Grudina, Natalia, ul.Gagarina, 43-63 (RU); Alexakhine, Rudolf, ul.Lenina, 68-17 (RU); Douflot, Vladimir, 249020 Obninsk (RU); Kalnitski, Boris, pos. Instituta, 5 (RU); Solovov, Alexei, pos. Instituta, 6-22 (RU); Dobrov, Igor, ul.Kurtschatowa, 4-15 (RU); Fedichkin, Valery, Kutusowskij pr., 22-225 (RU); Doubovik, Viktor, ul. 50 Let Oktjabrja, 15-4 (RU)
(74) Vertreter: Eisenführ, Speiser & Partner

(56) Entgegenhaltungen:
- WO-A-93/18667
- GB-A- 1 137 214
- GB-A- 1 519 427
- US-A- 4 035 479
- CHEMICAL ABSTRACTS, vol. 100, no. 7, 13. Februar 1984 (1984-02-13) Columbus, Ohio, US; abstract no. 50379j, M.F. KULIK ET AL.: "Effectiveness of using urea (fodder) additives in a polymeric base" Seite 483; Spalte 2; XP002208397 & SIL'S'KOGOSPOD. NAUKI, Bd. 11, 1983, Seiten 43-45,

## Beschreibung

Die Erfindung betrifft
(a) ein Verfahren (eine Methode) zur Erzeugung vollwertigen Eiweißfutters für landwirtschaftliche Tiere, die eine Erhöhung des Nährwerts des Futters gewährleistet, und
(b) das Mittel, dass die Effektivität der Aufnahme des Eiweißfutters ermöglicht.

Nach der vorhandenen Technologie der Fütterung von Wiederkäuern werden 60-70% der wertvollen Futtereiweiße im Pansen der Tiere unter der Einwirkung der dort befindlichen Mikroflora zerlegt. Das führt zu einer deutlichen Verringerung der Effektivität des Futters.

Für die Erhöhung der Eiweißaufnahme der Tiere ist es erforderlich, dass die Bearbeitung des Futters, die die Stabilität der Proteine des Futters gegenüber der mikrobiellen Zerlegung im Pansen gewährleistet, nicht ihre Aufnahme unter Wirkung der Fermente in den tieferen Teilen des Verdauungstraktes (im Labmagen und im Dünndarm) behindert.

Grundlage entsprechender Methoden ist in allen Fällen die Berücksichtigung der Bedingungen der Verdauung: saures Milieu, Verdauungsfermente im Labmagen und im Dünndarm.

Bekannt sind verschiedene Methoden der Verringerung des Grades der Zerlegung der Eiweiße im Pansen mittels verschiedener Futterbearbeitungen. Die beschriebenen Methoden können in 4 Gruppen eingeteilt werden:
1. Denaturierung der Proteine im stark alkalischen Milieu (pH9-13) in wässriger Lösung und mit nachfolgender Erhitzung von 30 auf 80°C und Verdunstung des Wassers (GB 2004728A) oder die thermische Behandlung wässriger Lösungen und Futtersuspensionen bei erhöhten Temperaturen bis zur Überführung der Masse in einen halbflüssigen oder flüssigen Zustand und nachfolgendes Versprühen der Masse in einen kalten Zustand unter einem Druck von 500 mg/cm² (GB 1202627).
2. Behandlung der Eiweiße und des eiweißhaltigen Futters mit Gerbstoffen, insbesondere Tannin (DE 1692441).
3. Behandlung des Eiweißfutters mit Aldehyden, vor allem Formaldehyd (US-Patent 3,925,560).
4. Granulierung der Futterzusätze und des eiweißhaltigen Futters und nachfolgende Verkapselung in im Pansen nicht löslichen Hüllen (in neutralem Milieu), z. B. auf der Grundlage von Fettsäuresalzen (PCT/ US 94/063 26), auf der Grundlage von filmbildenden Polymeren (8-15% der Masse des Futters und wasserlöslicher Ligninsulfonate 20-25% der Masse des Futters, Emulgatoren (Patent RF 2099964).

Die Mängel dieser Methoden bestehen in ihrer geringen Effektivität:
1. In der Toxizität der schützenden Agenzien (Formaldehyd und andere Aldehyde), Agenzien
2. in der Notwendigkeit, eine verhältnismäßig komplizierte Technologie der Futterverarbeitung zu nutzen (insbesondere der Granulierung)
3. in der Anwendung genügend großer Mengen von Schutzagenzien (mehr als 1 % der Futtermasse).
4. Neben der Verringerung der mikrobiellen Zerlegung des Eiweißes im Pansen, verringert sich der Grad der Aufnahme des Eiweißes in den unteren Teilen des Magen-Darm-Traktes im Falle der Denaturierung des Eiweißes bei seiner Bearbeitung mit Gerbstoffen, Lauge und bei der Hochtemperaturverarbeitung.

Deshalb führen die Ausgaben, die mit dem Schutz der Proteine des Futters vor mikrobieller Zerlegung im Pansen verbunden sind, zu einer spürbaren Erhöhung der Futterkosten und machen diese Methoden in der Mehrzahl der Fälle wenig rentabel.

Die größte Nähe zum erfindungsgemäßen Verfahren hat die Methode, die im Patent GB 1,137,214 (entspricht DE 1692412) beschrieben wurde, das als Prototyp angenommen wurde. Entsprechend dieser Methode wird das proteinhaltige Futter mit Formaldehyd, mit Produkten der Kondensation des Formaldehyds mit Amiden und/oder Aminen, mit wasserlöslichen Polymeren und mit Copolymeren des Polyvinylamins, des Polyvinylpyridins und des Polyvinylpyrrolidons oder auch des Methylpolyacrylamids und mit anderen polymeren Formaldehyden bearbeitet. Entsprechend dem Beispiel, das in der GB 1,137,214 angeführt ist, beträgt die Menge des Formaldehyds 3-40% der Masse des zu schützenden Proteins und die Menge der wasserlöslichen Polymere etwa 40% der Masse des bearbeiteten Proteins. Die Nutzung des in den Proteinen toxischen Formaldehyds und die Notwendigkeit seiner vollständigen Entfernung verkompliziert den Prozess sehr, und die Verwendung einer großen Menge wasserlöslicher Polymere (zig Prozente der Futtermasse) führt zu seiner bedeutenden Verteuerung. Diese Umstände senken die ökonomische Zweckmäßigkeit der industriellen Anwendung der Methode, die in der GB 1,137,214 beschrieben ist.

Aus der Zusammenfassung von Chemical Abstracts, Band 100, Nr. 7, 13. Februar 1984, Columbus, Ohio, USA, Abstract No: 50379j eines Artikels von M. F. Kulik et al. ist ein Gemisch aus Harnstoff und Polyacrylamid bzw. aus kurzkettigen Fettsäuren und Polyacrylamid bekannt. Diese Gemische werden als Additive dem Futter beigemengt.

Die technische Aufgabe, die durch die Erfindung gelöst wird, ist die Ausarbeitung eines hochrentablen Verfahrens zur Erhöhung der Aufnahme von gelösten Eiweißen aus einem Futter für landwirtschaftlicher Tiere infolge Verringerung der mikrobiellen Zerlegung der Proteine des Futters im Pansen eines solchen Tieres.

Die gestellte Aufgabe wird durch ein Verfahren zum Schutz eines Eiweißfutters gelöst, in dem das Eiweißfutter mit einer wässrigen Lösung eines chemischen schützenden Agens behandelt wird, wobei das schützendes Agens ein wasserlösliches Polymer mit einer Molekularmasse von 1 x 10⁵- bis 2 x 10⁷, nämlich Polyacrylamid ist. Gewöhnlich setzt man das wasserlösliche Polymer in einer Menge von (10⁻⁵- bis 10⁻²) zu 1 zur Masse des Futters ein. Das Verhältnis aus der Masse des Polymers (mₚ) zur Gesamtmasse des Futters (mₜₒₜₐₗ) liegt im Bereich von 10⁻⁵ : 1 bis 10⁻² : 1. Als Eiweißfutter benutzt man vorzugsweise Eiweißvitaminkonzentrat, das man bei der Züchtung von Futterhefe erhält, oder eiweißreiches Pflanzenfutter.

Die gestellte Aufgabe wird auch gelöst durch die Verwendung einer 0,001-0,1 %igen wässrigen Lösung des Polyacylamids mit einer molekularen Masse von 1 x 10⁵ -bis 2 x 10⁷ als Protektor eines Eiweißfutters, das für landwirtschaftlichen Tiere vorgesehen ist.

Polyacrylamid, ein wasserlösliches Polymer des Amids der Acrylsäure, ist ein sehr bekanntes Polymer.

Die Methoden seiner Gewinnung und auch seiner Anwendung, die auf seinen Eigenschaften beruhen (ausflockend, dispergierend und andere), sind gut bekannt und beschrieben (s. "Chemische Enzyklopädie" unter der Redaktion von I. L. Knunjanz, 1992, Bd. 3, 5. 6011)

Das Neue und Überraschende der vorgeschlagenen neuen Anwendung besteht in den niedrigen Konzentrationen des Polymers in der Lösung des Protektors, was unerwartet eine sehr effektive Aufnahme des Eiweißfutters bedingt. Deshalb ist das grundlegende, wesentliche Merkmal der Erfindung, dass als Zusatzstoff, der den Zerfall der Proteine senkt (als Protektor), ein wasserlösliches Polymer in äußerst geringer Menge von 1%-0,001% der Futtermasse, vorzugsweise von 0,01%-0,001%, eingesetzt wird. Das Polymer wird hierbei als vorzugsweise wässrige Lösung mit dem Eiweißfutter vermischt. Der Mechanismus der schützenden Wirkung des Zusatzes ist zur Zeit noch nicht bestimmt worden. Nach Meinung der Erfinder wird die hohe Effektivität des Zusatzes durch eine vom Polymer verursachte Koagulation in Lösung gehender Proteine erreicht, was zu einer Senkung der Zersetzung des Eiweißes durch die Mikroflora im Pansen der Tiere führt. Die koagulierende Wirkung des Polymers tritt insbesondere bei pH 6-7 auf, einem pH, wie er auch im Pansen vorliegt. In den unteren Bereichen des Magen-Darm-Traktes bei einem sauren Milieu (pH 1,2 - 2) gibt es keine koagulierende Wirkung des Polymers, das Protein wird löslich, leicht erreichbar für die die Nahrung verarbeitenden Fermente und leicht aufgenommen von den Tieren,

Die Effektivität und Reproduzierbarkeit des erfindungsgemäßen Verfahrens wird durch folgende Beispiele illustriert.

### Der Einfluss von Zusätzen eines wasserlöslichen Polymers auf den Grad des Zerfalls des Proteins im Pansen

Der Einfluss von Zusätzen eines wasserlöslichen Polymers (Polyacrylamid in wässriger Lösung) auf den Grad des Zerfalls der Proteine eiweißreichen Futters (Sonnenblumenölkuchen, Sojaschrot) bestimmte man mit der Methode der Inkubation von im Pansen enthaltenen Versuchsproben, die sich in einem Säckchen aus Nylonfasern befanden. Die Nylonsäckchen mit 3-5 g Futterproben legte man über eine Fistel in den unteren Teil des Pansens eines Bullen. Die Inkubation wurde über einen Zeitraum von 6 Stunden durchgeführt. Nach dem Ablauf der Inkubationsfrist wurden die Säckchen aus dem Pansen herausgenommen und man bestimmte die Menge des Proteins, die in der Versuchsprobe verblieben war und den Grad des Zerfalls der Proteine in % des Ausgangsgehalts.

Analoge Versuche wurden auch mit Eiweißfutterproben durchgeführt, die nicht mit der Polyacrylamidlösung behandelt waren (Kontrolle).

### Beispiel 1.

Im Pansen befanden sich Proben aus Sonnenblumenölkuchen, die mit einer wässrigen Polyacrylamidlösung mit einer Molekularmasse von 2x10⁷ behandelt worden waren. Die Menge des Polymers betrug 0,001% der Masse des Sonnenblumenölkuchens. Der Proteinzerfall betrug 29,0%. Der Zerfall der Proteine der Kontrollproben betrug ca. 61%. Der Grad des Schutzes des Eiweißes betrug im Vergleich zur Kontrolle 52,5%.

### Beispiele 2, 3.

Analog zum Beispiel 1, aber die Menge des Polymers betrug entsprechend 0,01% beziehungsweise 0,1% der Masse des Sonnenblumenölkuchens und die Molekularmasse war 1 x 10⁶.

### Beispiele 4, 5, 6.

Analog zu den Beispielen 1, 2, aber als Eiweißfutter nutzte man Sojaschrot. Die Ergebnisse der Untersuchungen sind in Tabelle 1 enthalten.

**Tabelle 1: Schutz der Proteine von Sonnenblumenölkuchen und Sojaschrot vor mikrobiellem Zerfall im Pansen eines Bullen**

| Nr. des Beispiels | Art der Futterbehandlung | Zerfallsgrad der Proteine in % des Ausgangsproteins | Grad des Schutzes vor Zerfall der Proteine im Verhältnis zur Kontrolle |
|---|---|---|---|
| 1. | 2 | 3 | 4 |
| | Sonnenblumenölkuchen (Kontrolle) | 61,6 | |
| | Menge des wasserlöslichen Polymers bezogen auf die Masse des Ölkuchens | | |
| 2. | 0,01%, Molekularmasse 1x10⁶ | 30,0 | |
| 3. | | | |
| | 0,1%, Molekularmasse 1x10⁶ | 26,4 | |
| | Sojaschrot (Kontrolle) | 62,8 | |
| | Menge des wasserlöslichen Polymers zur Masse des Ölkuchens | | |
| 4. | 0,001%, Molekularmasse 2x10⁶ | 18,2 | 74,2 |
| 5. | 0,01% Molekularmasse 5x10⁵ | 16,9 | 73,1 |
| 6. | 0,1 % Molekularmasse 1x10⁶ | 2,5 | 96,0 |
| 7. | 1 % Molekularmasse 1 x 10⁵ | 3,4 | 94,5 |

### Der Einfluss eines wasserlöslichen Polymers auf die Löslichkeit von Futterproteinen

Das analysierte Futter wurde mit der wässrigen Lösung von Polyacrylamid in einer 0,86 %igen Natriumchloridlösung mit pH 6,5 vermischt und bei einer Temperatur von 40°C eine Stunde lang gerührt. Danach wurde die Lösung filtriert und der Stickstoffgehalt im Filtrat nach Kjeldal bestimmt. In den Kontrollversuchen wurde die Löslichkeit der Futterproteine in einer wässrigen 0,86% Natriumchloridlösung ohne Zusatz von einem Polymer bestimmt.

Die Ergebnisse sind in Tabelle 2 aufgeführt.

**Tabelle 2: Der Einfluss von Zusätzen eines wasserlöslichen Polymers auf die Löslichkeit von Futterproteinen**

| Nr. des Beispiels | Futterart | Zerfallsgrad des Proteins in % des Ausgangsproteins | Grad der Verringerung der Löslichkeit |
|---|---|---|---|
| 8. | Sonnenblumenölkuchen - Kontrolle | 16,8 | 70 |
| | Menge des Polymers bezogen auf die Masse des Ölkuchens - 0,1 % Molekularmasse 2x10⁶ | 5,2 | |
| 9. | Mischfutter - Kontrolle | 40 | 50 |
| | Menge des Polymers zur Masse des Ölkuchens - 0,1 % Molekularmasse 2x10⁶ | 20 | |

Der Einfluss des Schutzes des Futtereiweiß auf den Zuwachs von Lebendmasse von Bullenkälbern

### Beispiel 10

Es wurden 2 Gruppen zu je 10 Bullen gebildet, eine Versuchsgruppe und eine Kontrollgruppe.
Die Zusammensetzung der täglichen Ration jeder Gruppe war wie folgt:
- Grünfutter - 20 kg;
- Getreidemischflitter (Buchweizen-30%, Weizen-40%, Erbsen-30%) - 1,5 kg
- Monocalciumphosphat - 0,5 kg,
- Salz- 0,035kg
Im Verlauf der ersten 34 Tage (1. Etappe) beinhaltete die Ration außerdem Sonneblumenölkuchen in einer Menge von 0,5 kg/Tag. Im Verlauf der folgenden 65 Tage (2. Etappe) beinhaltete die Ration Sojaschrot in einer Menge von 9,5 kg/Tag.
In der Versuchsgruppe wurde der Sonnenblumenölkuchen beziehungsweise das Sojaschrot mit 0,5 kg einer 0,1%- igen wässriger Lösung des Polyacrylamid mit einer Molekularmasse von 2x10⁶ behandelt.

Die Ergebnisse des Versuchs sind in Tabelle 3 aufgeführt.

**Tabelle 3: Mittlerer täglicher Zuwachs an Lebendmasse von Bullen**

| 1. Etappe | | | | 2. Etappe | | | |
|---|---|---|---|---|---|---|---|
| Versuchsgruppe | Kontrollgruppe | Zuwachs | | Versuchsgruppe | Kontrollgruppe | Zuwachs | |
| g | g | g/Tag | %/Tag | g | g | g/Tag | %/Tag |
| 867,6 | 729,4 | 138,2 | 18,9 | 1218 | 829 | 389 | 46,9 |

## Patentansprüche

1. Verfahren zum Schutz eines Eiweißfutters für landwirtschaftliche Tiere, in dem das Eiweißfutter mit einer wässrigen Lösung eines chemischen, schützenden Agens behandelt wird, **dadurch gekennzeichnet, dass** als schützendes Agens ein wasserlösliches Polymer mit einer Molekularmasse im Bereich zwischen 1 x 10⁵ und 2 x 10⁷, nämlich Polyacrylamid, verwendet wird.

2. Verfahren nach Anspruch 1, **dadurch gekennzeichnet, dass** das Verhältnis aus der Masse mp des wasserlöslichen Polymers zur Gesamtmasse mₜₒₜₐₗ des Futters im Bereich von 10⁻⁵: 1 bis 10⁻²: 1 liegt.

3. Verfahren nach Anspruch 1 oder 2, **dadurch gekennzeichnet, dass** das Eiweißfutter ein Eiweiß-Vitamin-Konzentrat, das man bei der Züchtung von Futterhefe erhält, oder ein eiweißreiches Pflanzenfutter ist.

4. Verwendung einer wässrigen Lösung mit einem Anteil von 0,001 bis 1 Gew.% Polyacrylamid einer Molekularmasse im Bereich zwischen 1 x 10⁵ und 2 x 10⁷ als Protektor eines Eiweißfutters für landwirtschaftliche Tiere.

## Claims

1. A method of protecting a protein feed for agricultural animals, in which the protein feed is treated with an aqueous solution of a chemical protective agent, **characterised in that** the protective agent used is a water-soluble polymer of a molecular weight in the range of between 1 x 10⁵ and 2 x 10⁷, namely polyacrylamide.

2. A method according to claim 1 **characterised in that** the ratio of the mass mₚ of the water-soluble polymer to the total mass mₜₒₜₐₗ of the feed is in the range of 10⁻⁵:1 to 10⁻²:1.

3. A method according to claim 1 or claim 2 **characterised in that** the protein feed is a protein-vitamin concentrate which is obtained when growing feed yeast or a protein-rich vegetable feed.

4. Use of an aqueous solution having a proportion of 0.001 to 1% by weight of polyacrylamide of a molecular weight in the range of between 1 x 10⁵ and 2 x 10⁷ as a protector for a protein feed for agricultural animals.

## Revendications

1. Procédé de protection d'un fourrage protéique pour animaux de ferme dans lequel le fourrage protéique est traité avec une solution aqueuse d'un agent protecteur chimique, **caractérisé en ce que** l'on utilise comme agent protecteur un polymère hydrosoluble ayant une masse moléculaire dans le domaine entre 1 x 10⁵ et 2 x 10⁷, à savoir un polyacrylamide.

2. Procédé selon la revendication 1, **caractérisé en ce que** le rapport de la masse mₚ du polymère hydrosoluble à la masse totale mₜₒₜₐₗ du fourrage est situé dans le domaine de 10⁻⁵:1 à 10⁻²:1.

3. Procédé selon la revendication 1 ou 2, **caractérisé en ce que** le fourrage protéique est un concentré de protéines et de vitamines que l'on obtient lors de la culture de levures fourragères, ou un fourrage végétal riche en protéines.

4. Utilisation d'une solution aqueuse ayant une proportion de 0,001 à 1 % en masse de polyacrylamide d'une masse moléculaire dans le domaine entre 1 x 10⁵ et 2 x 10⁷ comme protecteur d'un fourrage protéique pour animaux de ferme.
